(19) Europäisches Patentamt / European Patent Office / Office européen des brevets

(11) **EP 4 077 086 B1**

(12) **FASCICULE DE BREVET EUROPEEN**

(45) Date de publication et mention
de la délivrance du brevet:
**17.01.2024   Bulletin 2024/03**

(21) Numéro de dépôt: **20811686.3**

(22) Date de dépôt: **30.11.2020**

(51) Classification Internationale des Brevets (IPC):
**B60W 30/14** *(2006.01)*       **B60W 50/00** *(2006.01)*

(52) Classification Coopérative des Brevets (CPC):
**B60W 30/143; B60W 50/0097;** B60T 2230/04;
B60W 2520/10; B60W 2520/105; B60W 2556/50;
B60W 2720/10; B60W 2720/103; B60W 2720/106

(86) Numéro de dépôt international:
**PCT/EP2020/083884**

(87) Numéro de publication internationale:
**WO 2021/121924 (24.06.2021 Gazette 2021/25)**

(54) **PROCÉDÉ DE DÉTERMINATION D'UN PROFIL DE VITESSE D'UN VEHICULE AUTOMOBILE À ACCÉLÉRATION NON PRÉDÉTERMINÉE**

VERFAHREN ZUR BESTIMMUNG EINES GESCHWINDIGKEITSPROFILS EINES KRAFTFAHRZEUGES MIT NICHT VORGEGEBENER BESCHLEUNIGUNG

METHOD FOR DETERMINING A SPEED PROFILE OF A MOTOR VEHICLE WITH NON-PREDETERMINED ACCELERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019   FR 1914455**

(43) Date de publication de la demande:
**26.10.2022   Bulletin 2022/43**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeurs:
• **BORDELAIS, Francois**
  **92000 NANTERRE (FR)**
• **FADIGA, Vakanga**
  **92210 ST CLOUD ST CLOUD (FR)**
• **PEYRET, Maud**
  **75014 Paris (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
EP-A1- 3 144 197          EP-A2- 3 127 770
WO-A1-2019/020354         DE-A1-102012 213 321
US-A1- 2012 277 965       US-B1- 9 932 038

**EP 4 077 086 B1**

**Description**

La présente invention concerne le domaine des véhicules automobiles, et notamment le domaine des systèmes et dispositifs d'assistance à la conduite de tels véhicules. Elle concerne plus particulièrement un procédé de détermination d'un profil de vitesse à suivre d'un véhicule automobile.

Il est connu des systèmes de régulation de vitesse adaptatifs d'un véhicule automobile (connus sous l'acronyme ACC pour « Adaptive Cruise Control), conçus pour contrôler en continu la vitesse du véhicule « hôte » selon une loi de contrôle longitudinal du véhicule apte à contrôler la vitesse du véhicule « hôte » en fonction d'une consigne de vitesse demandée par le conducteur et de la présence d'un véhicule précédent sur la même voie de circulation, appelé « véhicule cible ». Cette loi de contrôle longitudinal peut être employée dans différents scénarios. Ainsi, le véhicule équipé peut moduler automatiquement sa vitesse pour garder une distance de sécurité prédéterminée avec le véhicule cible. Dès que la voie est libre devant le véhicule équipé, son accélération augmente automatiquement pour atteindre la vitesse de consigne sélectionnée par le conducteur, et ainsi assister le conducteur dans sa tâche de conduite. Si un véhicule plus lent est détecté sur sa voie de circulation devant le véhicule équipé, la vitesse est alors automatiquement modulée pour adapter la distance de sécurité. Cette loi de contrôle peut également vérifier simultanément des critères de confort (accélérations, décélérations et jerk (c'est-à-dire la dérivée de l'accélération) bornés).

La loi de contrôle permet donc de réguler une vitesse longitudinale du véhicule conformément à la consigne de vitesse définie par le conducteur et, le cas échéant, de réduire cette vitesse dans le cas où un véhicule cible est détecté devant le véhicule hôte. Cette régulation ne tient en revanche pas compte pour anticiper les décélérations et accélérations, des informations contextuelles et sémantiques susceptibles d'être extraites de la scène routière observée par un système de détection multi-capteurs équipant le véhicule hôte, telles que l'arrivée à un panneau STOP, l'approche d'un rond-point, d'un virage, d'une situation de bouchon ou encore un changement de la limitation de vitesse, etc. En conséquence, l'allure du véhicule n'est pas toujours adaptée à son environnement. Or, la prise en compte d'informations contextuelles est souhaitable afin d'atteindre des systèmes de régulation plus robustes, indispensables pour la conduite autonome. US 2012/277965 A1 décrit un procédé de détermination d'un profil de vitesse à suivre d'un véhicule automobile,

Le document de brevet US2019106108 décrit une loi de contrôle qui détermine un profil de vitesse pour un véhicule automobile le long d'une trajectoire planifiée en réponse au moins en partie à (i) la détection d'un objet le long de la trajectoire planifiée, (ii) à la détermination d'un changement de limitation de vitesse le long de la trajectoire planifiée et (iii) à la sélection d'une vitesse par l'utilisateur. La loi de contrôle permet alors de gérer la vitesse du véhicule le long de la trajectoire planifiée conformément au profil de vitesse déterminé.

Toutefois, cette publication reste très générale dans la mise en oeuvre. Notamment, il est indiqué qu'on utilise un profil de vitesse basé sur un profil d'accélération qui est calculé différemment en fonction de certaines conditions, mais il n'est pas expliqué comment ce profil est calculé pour garantir le confort du conducteur. Un autre problème posé est celui de disposer de suffisamment de données pour permettre la calibration du système.

De manière plus générale, un autre problème subsiste dans l'état de la technique, qui est celui de générer un profil de vitesse à suivre par le régulateur de vitesse, qui permette de réaliser des économies d'énergie lors du trajet.

Pour remédier aux problèmes susmentionnés, l'invention a pour objet un procédé de détermination d'un profil de vitesse à suivre d'un véhicule automobile, le procédé comprenant des étapes d'acquisition d'informations contextuelles de l'environnement routier du véhicule par un système multi-capteurs du véhicule, d'extraction de données d'évènement à partir des informations contextuelles acquises, comprenant au moins une distance à un événement par rapport audit véhicule et une vitesse cible pour ledit véhicule au niveau de cet évènement, de fourniture d'une vitesse initiale mesurée dudit véhicule, de détermination d'un profil de vitesse à suivre en fonction du temps, entre ladite vitesse initiale mesurée et ladite vitesse cible en trois phases distinctes successives, respectivement une première phase où on fixe constant le jerk à une valeur de jerk maximale prédéterminée pour atteindre une valeur d'accélération cible optimale à la fin de la première phase, une deuxième phase où on maintient constante ladite valeur d'accélération cible optimale pendant toute la durée de la deuxième phase et une troisième phase où on fixe à nouveau constant le jerk pour atteindre une valeur d'accélération nulle à la fin de la troisième phase, ledit procédé comprenant une étape de détermination de ladite valeur d'accélération cible optimale durant la deuxième phase telle que la distance nécessaire pour réaliser les trois phases dudit profil en appliquant ladite valeur d'accélération cible optimale déterminée soit égale à ladite distance à l'évènement.

Avantageusement, la distance nécessaire pour réaliser les trois phases dudit profil est calculée à partir d'un ensemble d'équations mises en oeuvre pour le calcul du profil de vitesse, dont les étapes de calcul comprennent, pour un ensemble de paramètres fixés comportant la vitesse initiale et l'accélération initiale du véhicule au moment du démarrage du profil de vitesse, la vitesse cible au niveau de l'évènement et la valeur de jerk maximale prédéterminée, et pour un paramètre non fixé comportant l'accélération cible optimale à atteindre pendant la deuxième phase du profil :

- le calcul de la durée des phases et des instants de début et de fin délimitant les phases,

- le calcul des vitesses de passage aux instants de début et de fin délimitant la deuxième phase,

- le calcul de la vitesse en fonction du temps pour chacune des phases et

- le calcul des distances parcourues aux instants de début et de fin délimitant les phases.

Avantageusement, la détermination de ladite valeur d'accélération cible optimale est réalisée par itération et dichotomie à partir d'un intervalle prédéterminé borné par une valeur d'accélération minimale et une valeur d'accélération maximale.

Avantageusement, à chaque itération, on calcule la distance nécessaire pour réaliser le profil avec une valeur intermédiaire d'accélération, qui est un barycentre des deux valeurs d'accélération minimale et maximale.

Avantageusement, dans ladite troisième phase, on fixe constant le jerk à ladite valeur de jerk maximale prédéterminée de la première phase.

En variante, dans ladite troisième phase, on fixe constant le jerk à une valeur de jerk maximale prédéterminée différente de ladite valeur de jerk maximale prédéterminée de la première phase.

Avantageusement, ladite valeur de jerk maximale prédéterminée est différente selon que le profil de vitesse concerne une accélération positive ou une accélération négative du véhicule.

Avantageusement, le procédé comprend une étape de transmission dudit profil de vitesse en tant que consigne à un système de régulation de vitesse adaptatif équipant le véhicule.

L'invention concerne également un dispositif destiné à être embarqué sur un véhicule automobile pour la mise en oeuvre du procédé tel que décrit ci-dessus, caractérisé en ce qu'il comprend un système multi-capteurs apte à acquérir des informations contextuelles de l'environnement routier du véhicule automobile, un capteur de vitesse du véhicule, des moyens de calcul dudit profil de vitesse en fonction de données d'évènement extraites desdites informations contextuelles acquises et des moyens de commande pour appliquer ledit profil de vitesse calculé à un système de régulation vitesse adaptatif du véhicule.

L'invention concerne encore un véhicule automobile comprenant un dispositif tel que décrit ci-dessus.

D'autres caractéristiques et avantages de l'invention ressortiront clairement de la description qui en est faite ci-après, à titre indicatif et nullement limitatif, en référence aux dessins annexés sur lesquels :

[Fig. 1] est un graphe illustrant un exemple de profil de vitesse selon l'invention en fonction du temps, à accélération dépendante de la distance à un événement, permettant au véhicule de passer de sa vitesse initiale à une vitesse cible à atteindre à l'évènement, dans un cas où la vitesse cible et inférieure à la vitesse initiale ;

[Fig. 2] est un organigramme illustrant l'algorithme de dichotomie mis en oeuvre pour déterminer l'accélération nécessaire durant la deuxième phase du profil de vitesse ;

[Fig. 3] est un graphe illustrant les différentes valeurs de distance nécessaire pour réaliser le profil de vitesse, en fonction des valeurs de jerk et d'accélération choisies pour des valeurs de vitesse initiale et vitesse cible fixées.

[Fig. 4] est un ensemble de graphes illustrant la vitesse du véhicule selon le profil de vitesse, de distance à l'évènement et d'accélération du véhicule.

L'invention s'applique à un véhicule automobile équipé d'un système de régulation de vitesse adaptatif et d'un système de perception multi-capteurs aptes à délivrer des informations contextuelles relatives aux événements de la scène routière à l'avant du véhicule, par exemple l'approche d'un rond-point, d'un virage, d'un bouchon, d'un changement de limitation de vitesse, etc. Les données collectées par les capteurs embarquées sont envoyées à un calculateur électronique, qui grâce à un algorithme de perception de l'environnement analysant ces données, construit une description de l'environnement proche du véhicule et une configuration de la scène routière. A partir de cet environnement, le système est capable de fournir un couple (distance, vitesse) relatif à un événement détecté, comprenant la distance à cet événement $D_{event}$ et la vitesse à atteindre $V_3$ au niveau de cet évènement, dite vitesse cible. Cet événement détecté peut être par exemple un panneau de limitation de vitesse.

Le véhicule comporte également un capteur de vitesse embarqué, délivrant une information sur sa vitesse et son accélération par traitement de la vitesse.

Le profil de vitesse qui va être décrit ci-après est un profil de vitesse déterminé à partir de la vitesse mesurée du véhicule et destiné à être transmis en tant que consigne à suivre au système de régulation de vitesse adaptatif du véhicule de façon à anticiper les décélérations et accélérations lors de l'approche d'un évènement. Plus précisément, le profil de vitesse doit permettre au véhicule de passer de sa vitesse initiale à la vitesse cible en respectant des contraintes de dynamique véhicule en termes d'accélération, pouvant être positive ou négative (décélération), selon le type de profil, et d'à-coup ou de jerk, c'est-à-dire de dérivée de l'accélération. Ces dernières contraintes permettront d'optimiser les performances de suivi de ce profil par le système de régulation de vitesse adaptatif du véhicule.

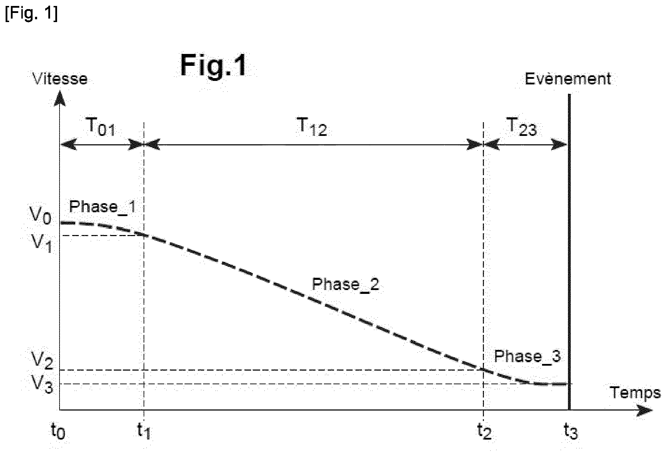

On va maintenant illustrer le principe du profil de vitesse de l'invention en partant d'un exemple de profil décroissant, comme illustré à la figure 1, prenant comme hypothèse de départ une accélération initiale nulle et une vitesse initiale du véhicule constante, notée $V_0$, et comme hypothèse d'arrivée, une accélération nulle et une vitesse cible $V_3$ du véhicule constante, avec $V_3 < V_0$, puisque le profil de vitesse est ici décroissant.

Le profil de vitesse présenté sur la figure 1 est défini selon l'invention en trois phases successives :

- une première phase, notée Phase_1, s'étendant entre les instants de début $t_0$ et de fin $t_1$ délimitant cette phase, dans laquelle la valeur de jerk est fixée à une valeur de jerk maximale prédéterminée, de valeur absolue notée $J_{maxi}$, pour atteindre une valeur d'accélération cible optimale à l'instant $t_1$, de valeur absolue notée $A_{target}$,

- une deuxième phase, notée Phase_2, s'étendant entre les instants de début $t_1$ et de fin $t_2$ délimitant cette phase, dans laquelle la valeur d'accélération cible atteinte en $t_1$ est maintenue constante pendant toute la durée de la deuxième phase, la valeur de jerk étant alors nulle,

- une troisième, notée Phase_3, s'étendant entre les instants de début $t_2$ et de fin $t_3$ délimitant cette phase, dans laquelle la valeur de jerk est à nouveau préférentiellement fixée à la valeur de jerk maximale prédéterminée $J_{maxi}$, pour revenir à une valeur d'accélération nulle à l'instant $t_3$.

Le découpage du profil de vitesse selon l'invention en trois phases successives distinctes est nécessaire pour respecter les contraintes de dynamique du véhicule en termes de valeur de jerk dans les phases Phase_1 et Phase_3.

On dispose donc du jeu de paramètres fixés suivants :

$V_0$ : la vitesse initiale au moment du démarrage du profil de vitesse ;
$V_3$ : la vitesse cible à atteindre au niveau de l'événement ;
$A_{init}$ : l'accélération du véhicule au moment du démarrage du profil, éventuellement non nulle;
$J_{maxi}$ : la valeur de jerk maximale définie pour le profil.

Le profil de vitesse est exprimé par deux fonctions de calcul utilisées effectivement par le système de régulation de vitesse du véhicule :
Une vitesse de consigne, $V_{profil}$ , à suivre en fonction du temps (t) :

$$V_{profil}(t) = f(t, V_0 V_3, A_{init}, J_{maxi})$$

La distance nécessaire pour réaliser le profil de vitesse, notée $D_{profil}$.

Le suivi du profil sera déclenché dès que la distance à l'événement visé que l'on cherche à anticiper, $D_{event}$, provenant du système de perception multi-capteurs du véhicule devient égale à $D_{profil}$, pour un jeu de paramètres donné.

On souhaite démarrer le profil au moment où la distance à l'évènement $D_{event}$ et la vitesse à atteindre $V_3$ au niveau de l'évènement sont connues, le suivi du profil devant garantir une allure adaptée à la vitesse cible souhaitée au niveau de cet évènement. Pour ce type de profil, l'accélération à utiliser n'est pas une contrainte. Cela implique de générer un profil de vitesse à accélération non prédéterminée. Il est donc nécessaire de déterminer l'accélération avant de calculer le profil de vitesse à suivre. La détermination de l'accélération est réalisée par dichotomie.
la méthode dichotomique permet de trouver une valeur d'accélération cible optimale $A_{target}$ telle que :

$$\begin{cases} D_{profil}(V_0, V_3, J_{maxi}, A_{target}) = D_{event} \\ |A_{target}| \leq A_{maxi} \end{cases}$$

Les étapes de calcul permettant de calculer cette distance nécessaire pour réaliser le profil de vitesse $D_{profil}$ vont être détaillées ci-après.

On calcule les durées des phases et les instants de début et de fin $t_0$, $t_1$, $t_2$ et $t_3$ , délimitant les phases Phase_1, Phase_2 et Phase_3 comme définis sur la figure 1.

On calcule les vitesses de passage $V_1$ et $V_2$ , correspondant aux vitesses respectives de passage aux instants de début et de fin $t_1$ et $t_2$ délimitant la deuxième phase Phase_2.

On calcule le comportement de la vitesse en fonction du temps pour chacune des phases Phase_1, Phase_2 et Phase_3.

On calcule les distances parcourues en fonction du temps, au niveau de chacun des instants ta, $t_1$, $t_2$ et $t_3$ délimitant les différentes phases Phase_1, Phase_2 et Phase_3, notées respectivement $X_0$, $X_1$, $X_2$ et $X_3$. Ainsi, la distance nécessaire pour réaliser le profil est $D_{profil}= X_3$.

Les résultats de ces étapes de calcul du profil de vitesse sont détaillées ci-après et seront démontrés plus loin.

S'agissant du calcul des instants de début et de fin $t_0$, $t_1$, $t_2$ et $t_3$ délimitant les phases Phase_1, Phase_2 et Phase_3, on note :

$$t_0 = 0 \text{ (par hypothèse)}$$

$$t_1 = T_{01}$$

$$t_2 = T_{01} + T_{12}$$

$$t_3 = T_{01} + T_{12} + T_{23}$$

Avec $T_{01}$, $T_{12}$ et $T_{23}$ les durées respectives des phases Phase_1, Phase_2 et Phase_3 en intégrant la vitesse entre les différents points :

$$T_{01} = \frac{A_{target}}{J_{maxi}}$$

$$T_{12} = \frac{V_0 - V_3}{A_{target}} - \frac{A_{target}}{J_{maxi}}$$

$$T_{23} = \frac{A_{target}}{J_{maxi}}$$

Concernant les différentes vitesses de passage des phases, soit les vitesses aux instants ta, $t_1$, $t_2$ et $t_3$, notées respectivement $V_0$, $V_1$, $V_2$ et $V_3$, elles s'expriment comme suit :

$V_0$ , la vitesse initiale du profil, qui est une valeur imposée, correspondant à la vitesse courante mesurée du véhicule au moment où le profil est calculé,

$$V_1 = V_0 - J_{maxi} \times \frac{T_{01}^2}{2}$$

$$V_2 = V_3 + \frac{T_{23}^2}{2} \times J_{maxi}$$

$V_3$ est la vitesse cible que l'on souhaite atteindre en suivant le profil de vitesse et est également imposée, comme la vitesse initiale.

On détermine l'équation du profil de vitesse v(t) pour chacune des phases en fonction du temps écoulé, de la manière suivante :

Phase_1, pour $0 \leq t \leq t_1$ :

$$V(t) = V_0 - J_{maxi} \times \frac{t^2}{2}$$

Phase_2, pour $t_1 \leq t \leq t_2$ :

$$V(t) = V_1 - A_{target} \times (t - t_1)$$

Phase_3, pour $t_2 <= t <= t_3$ :

$$V(t) = V_3 + \frac{(t-t_3)^2}{2} \times J_{maxi}$$

Les distances parcourues en fonction du temps sont calculées comme suit :

$$X_0 = 0 \ \text{(par hypothèse)}$$

$$X_1 = X_0 + T_{01} \times V_0 - \frac{T_{01}^3}{6} \times J_{maxi}$$

$$X_2 = X_1 + T_{12} \times V_1 - \frac{T_{12}^2}{2} \times A_{target}$$

$$X_3 = X_2 + T_{23} \times V_3 + \frac{T_{23}^3}{6} \times J_{maxi}$$

La distance nécessaire pour réaliser le profil est $D_{profil} = X_3$. Ainsi, lorsque la distance à l'événement sera égale à $X_3$, on déclenchera le suivi du profil de vitesse en envoyant une consigne de vitesse $V(t)$ telle que définie ci-dessus.

On va maintenant démontrer ces résultats.

Pour la phase Phase_1, pour t tel que $t_0 \leq t \leq t_1$ :

Le jerk $J_{01}(t)$ du profil sur cette première phase est fixé constant et vaut :

$$J_{01}(t) = -J_{maxi}$$

L'accélération initiale $A_{init}$ étant nulle, l'accélération en fonction du temps, notée $A_{01}(t)$ dans cette première phase, vaut :

$$A_{01}(t) = A_{init} + \int_0^t J(t)dt$$

$$A_{01}(t) = -J_{maxi} \times t$$

On en déduit alors l'évolution de la vitesse en fonction du temps, notée $V_{01}(t)$ dans cette première phase:

$$V_{01}(t) = V_0 + \int_0^t A_{01}(t)dt$$

$$V_{01}(t) = V_0 - J_{maxi} \times \frac{t^2}{2}$$

D'où la distance parcourue en fonction du temps $X_{01}(t)$ dans la première phase Phase_1 :

$$X_{01}(t) = X_0 + \int_0^t V_{01}(t)dt$$

$$X_{01}(t) = t \times V_0 - \frac{t^3}{6} \times J_{maxi}$$

Pour la deuxième phase Phase_2, pour t tel que $t_1 \leq t \leq t_2$ :

L'accélération en fonction du temps, notée $A_{12}(t)$ dans cette deuxième phase, est constante dans cette phase, soit :

$$A_{12}(t) = -A_{target}$$

On en déduit donc l'évolution de la vitesse en fonction du temps dans cette deuxième phase, notée $V_{12}(t)$ :

$$V_{12}(t) = V_1 + \int_{t_1}^t A_{12}(t)dt$$

$$V_{12}(t) = V_1 - A_{target} \times (t - t_1)$$

D'où la distance parcourue en fonction du temps $X_{12}(t)$ dans cette deuxième phase :

$$X_{12}(t) = X_1 + \int_{t_1}^t V_{12}(t)dt$$

$$X_{12}(t) = X_1 + (t - t_1) \times V_1 - \frac{(t-t_1)^2}{2} \times A_{target}$$

Enfin, pour la troisième phase Phase_3, pour t tel que $t_2 \leq t \leq t_3$ :

Le jerk $J_{23}(t)$ du profil sur cette première phase est fixé constant et vaut :

$$J_{23}(t) = J_{maxi}$$

L'accélération finale de la troisième phase $A_{final}$ étant nulle, l'accélération en fonction du temps notée $A_{23}(t)$ dans cette phase vaut :

$$A_{23}(t) = A_{final} + \int_{t_3}^{t} J_{23}(t)dt$$

$$A_{23}(t) = (t - t_3) \times J_{maxi}$$

On en déduit alors l'évolution de la vitesse en fonction du temps au cours de cette troisième phase, notée $V_{23}(t)$ :

$$V_{23}(t) = V_3 + \int_{t_3}^{t} A_{23}(t)dt$$

$$V_{23}(t) = V_3 + \frac{(t-t_3)^2}{2} \times J_{maxi}$$

D'où la distance parcourue en fonction du temps $X_{23}(t)$ dans cette phase :

$$X_{23}(t) = X_3 + \int_{t_3}^{t} V(t)dt$$

$$X_{23}(t) = X_3 + (t - t_3) \times V_3 + \frac{(t-t_3)^3}{6} \times J_{maxi}$$

S'agissant de l'expression des durées respectives des phases $T_{01}$, $T_{12}$ et $T_{23}$ et des instants de début et de fin délimitant les phases, on note pour rappel :

$$t_0 = 0 \text{ (par hypothèse)}$$

$$t_1 = T_{01}$$

$$t_2 = T_{01} + T_{12}$$

$$t_3 = T_{01} + T_{12} + T_{23}$$

La durée $T_{01}$ de la première phase Phase_1 vaut :

$$T_{01} = t_1 - t_0 = t_1$$

Or, l'accélération est continue entre la première phase Phase_1 et la deuxième phase Phase_2, soit :

$$A_{01}(t_1) = A_{12}(t_1)$$

Ce qui est équivalent à :

D'où :

$$-J_{maxi} \times t_1 = -A_{target}$$

$$T_{01} = t_1 = \frac{A_{target}}{J_{maxi}}$$

Ainsi, la vitesse $V_1$ atteinte l'instant $t_1$ (correspondant à la fin de la première phase et au début de la deuxième phase vaut :

$$V_1 = V_{01}(t_1) = V_{01}(T_{01})$$

Soit

$$V_1 = V_0 - J_{maxi} \times \frac{T_{01}^2}{2}$$

Partons maintenant de la durée $T_{23}$ de la troisième phase Phase_3, celle-ci vaut :

$$T_{23} = t_3 - t_2$$

Or, de même qu'entre la première phase et la deuxième phase, l'accélération est continue entre la deuxième phase Phase_2 et la troisième phase Phase_3, ce qui se traduit par :

$$A_{23}(t_2) = A_{12}(t_2)$$

Ce qui est équivalent à :
D'où :

$$(t_2 - t_3) \times J_{maxi} = -T_{23} \times J_{maxi} = -A_{target}$$

$$T_{23} = \frac{A_{target}}{J_{maxi}}$$

Ainsi, la vitesse $V_2$ atteinte à l'instant $t_2$ (correspondant à la fin de la deuxième phase et au début de de la troisième phase) vaut :

D'où :

$$V_2 = V_{23}(t_2) = V_{23}(T_{23})$$

$$V_2 = V_3 + J_{maxi} \times \frac{T_{23}^2}{2}$$

Partons maintenant de la durée $T_{12}$ de la deuxième phase Phase_2, celle-ci vaut :

$$T_{12} = t_2 - t_1$$

Or, la vitesse à l'instant $t_2$ de fin de la deuxième phase est notée $V_2$ et peut s'écrire comme suit :

$$V_{12}(t_2) = V_2$$

Ce qui est équivalent à :

Ainsi :

$$V_1 - A_{target} \times (t_2 - t_1) = V_1 - A_{target} \times T_{12} = V_2$$

$$T_{12} = \frac{V_1 - V_2}{A_{target}}$$

En remplaçant les expressions de $V_1$, $V_2$ , $T_{01}$ et $T_{23}$ précédemment développées, on en déduit :

$$T_{12} = \frac{V_0 - V_3}{A_{maxi}} - \frac{A_{target}}{J_{maxi}}$$

Il ressort de la démonstration des résultats du calcul du profil de vitesse que bien que celui-ci soit défini en 3 phases en fonction du temps, son implémentation reste simple car elle ne nécessite que des opérations mathématiques simples (additions, multiplications, divisions) et des vérifications logiques simples. La puissance de calcul nécessaire est donc limitée.

On fait maintenant référence à un profil plus général de vitesse, c'est-à-dire qui peut être croissant ou décroissant, avec une valeur d'accélération initiale éventuellement non nulle.

On prend donc ici comme hypothèse de départ une accélération initiale $A_{init}$ éventuellement non nulle et une vitesse initiale $V_0$ du véhicule constante et, comme hypothèse d'arrivée, une accélération nulle et une vitesse cible $V_3$ du véhicule constante, avec $V_3 < V_0$ ou $V_3 > V_0$, selon que le profil de vitesse est décroissant ou croissant.

Comme pour l'exemple précédent, le profil de vitesse est toujours défini conformément à l'invention par les trois phases successives suivantes :

- la première phase Phase_1, où la valeur de jerk est fixée à la valeur de jerk maximale $J_{maxi}$, pour atteindre la valeur d'accélération cible optimale, dépendante de la distance à l'évènement détecté, de valeur absolue notée $A_{target}$,

- la deuxième phase Phase_2, où l'accélération est maintenue à la valeur d'accélération cible optimale,

- la troisième phase, à la valeur de jerk maximale pour revenir à une valeur d'accélération nulle.

De la même façon que précédemment, la distance nécessaire pour réaliser le profil de vitesse est notée $D_{profil}$. Ainsi, le profil sera déclenché lorsqu'on arrive à une distance $D_{profil}$ de l'évènement.

Les paramètres $A_{init}$ et $J_{maxi}$ étant des valeurs absolues, on introduit les variables suivantes s et s1 traduisant les valeurs relatives des accélérations et de jerk.

On définit la variable s de la façon suivante :

$$s = \begin{cases} 1 \text{ si } V_3 > V_0 \\ -1 \text{ sinon} \end{cases}$$

EP 4 077 086 B1

Ainsi, si le profil est croissant, soit $V_3 > V_0$, alors s vaudra 1 et s'il est décroissant, s vaudra -1. Par ailleurs, dans la première phase Phase_1 du profil de vitesse, l'accélération évoluera de $A_{init}$ à s $\times$ $A_{target}$ , dans la deuxième phase Phase_2, elle sera maintenue à s $\times$ $A_{target}$ et dans la troisième phase Phase_3, elle évoluera de $s \times A_{target}$ à 0 m/s$^2$ .

On définit par ailleurs la variable $s_1$ de la façon suivante :

$$s_1 = \begin{cases} 1 \; si \; s \times A_{\text{target}} > A_{init} \\ -1 \; sinon \end{cases}$$

Cette variable traduit ainsi le sens d'évolution de l'accélération dans la première phase Phase_1, qui évolue de $A_{int}$ à $s \times A_{target}$. Ainsi, le jerk dans cette phase vaut $s_1 \times J_{maxi}$ .

Comme expliqué en référence à l'exemple précédent, les étapes de calcul du profil de vitesse sont les suivantes :

On calcule les durées des phases et les instants de début et de fin $t_0$, $t_1$, $t_2$ et $t_3$ , délimitant les phases Phase_1, Phase_2 et Phase_3.

On calcule les vitesses de passage $V_1$ et $V_2$ , correspondant aux vitesses respectives de passage aux instants de début et de fin $t_1$ et $t_2$ délimitant la deuxième phase Phase_2.

On calcule le comportement de la vitesse en fonction du temps pour chacune des phases Phase_1, Phase_2 et Phase_3.

On calcule les distances parcourues en fonction du temps, au niveau de chacun des instants ta, $t_1$, $t_2$ et $t_3$ délimitant les différentes phases Phase_1, Phase_2 et Phase_3, notées respectivement $X_0$, $X_1$, $X_2$ et $X_3$.

Le tableau ci-dessous résume l'évolution des variables de jerk, d'accélération, de vitesse et de distance parcourue suivant les différentes phases du profil de vitesse général :

[Table 1]

| | | Phase_1 | | Phase_2 | | Phase_3 | |
|---|---|---|---|---|---|---|---|
| | instant | jerk constant | instant | accélération constante | instant | jerk constant | instant |
| Instant t | $t_0 = 0$ | $t_0 \leq t \leq t_1$ | $t_1$ | $t_1 \leq t \leq t_2$ | $t_2$ | $t_2 \leq t \leq t_3$ | $t_3$ |
| JerkJ(t) | | $s_1 \times J_{maxi}$ | | 0 | | $s \times J_{maxi}$ | |
| Accélération A(t) | $A_{init}$ | $A_{init} \rightarrow s \times A_{target}$ | $s \times A_{target}$ | $s \times A_{target}$ | $s \times A_{target}$ | $s \times A_{target} \rightarrow 0$ | 0 |
| Vitesse V(t) | $V_0$ | $V_0 \rightarrow V_1$ | $V_1$ | $V_1 \rightarrow V_2$ | $V_2$ | $V_2 \rightarrow V_3$ | $V_3$ |
| Distance parcourue X(t) | $X_0 = 0$ | $X_0 \rightarrow X_1$ | $X_1$ | $X_1 \rightarrow X_2$ | $X_2$ | $X_2 \rightarrow X_3$ | $X_3$ |

En suivant la même démarche que dans le cas de l'exemple précédent concernant un profil de vitesse décroissant et d'accélération initiale nulle, on définit les paramètres et vitesses du profil comme suit :

Concernant les instants de début et de fin de la première phase Phase_1, on note :

$$t_0 = 0 \text{ (par hypothèse)}$$

$$t_1 = T_{01}$$

Avec les durées respectives des première et troisième phases Phase_1 et Phase_3, qui s'énoncent comme suit :

11

$$T_{01} = s_1 \times \frac{s \times A_{target} - A_{init}}{J_{maxi}}$$

$$T_{23} = \frac{A_{target}}{J_{maxi}}$$

Les vitesses de passage des phases s'expriment comme suit :

$V_0$ est la vitesse initiale imposée du profil,

$$V_1 = V_0 + T_{01} \times A_{init} + s_1 \times J_{maxi} \times \frac{T_{01}^2}{2}$$

$$V_2 = V_3 - s \times J_{maxi} \times \frac{T_{23}^2}{2}$$

$V_3$ est la vitesse cible imposée.

La durée $T_{12}$ de la deuxième phase Phase_2 est définie comme suit :

$$T_{12} = s \times \frac{V_2 - V_1}{A_{target}}$$

Les instants $t_2$ et $t_3$ délimitant la troisième phase Phase_3 sont définis comme suit :

$$t_2 = T_{01} + T_{12}$$

$$t_3 = T_{01} + T_{12} + T_{23}$$

On détermine l'équation du profil de vitesse v(t) pour chacune des phases en fonction du temps écoulé, de la manière suivante :

Phase_1, pour
Phase_2, pour
Phase_3, pour

$$0 \leq t \leq t_1 : V(t) = V_0 + A_{init} \times t + s_1 \times J_{maxi} \times \frac{t^2}{2}$$

$$t_1 \leq t \leq t_2 : V(t) = V_1 + A_{target} \times s \times (t - t_1)$$

$$t_2 <= t <= t_3 : V(t) = V_3 + \frac{(t - t_3)^2}{2} \times (-J_{maxi} \times s)$$

Les distances parcourues en fonction du temps sont calculées comme suit :

$$X_0 = 0 \text{ (par hypothèse)}$$

$$X_1 = X_0 + T_{01} \times V_0 + \frac{T_{01}^2}{2} \times A_{init} + \frac{T_{01}^3}{6} \times s_1 \times J_{maxi}$$

$$X_2 = X_1 + T_{12} \times V_1 + \frac{T_{12}^2}{2} \times A_{target} \times s$$

$$X_3 = X_2 + T_{23} \times V_3 - \frac{T_{23}^3}{6} \times J_{maxi} \times s$$

La distance nécessaire pour réaliser le profil est $D_{profil}= X_3$.

En variante, les valeurs de jerk fixées dans les première et troisième phases du profil de vitesse peuvent être différentes.

En variante encore, on pourrait prévoir d'avoir des valeurs de jerk différentes selon que le profil concerne une accélération ou une décélération.

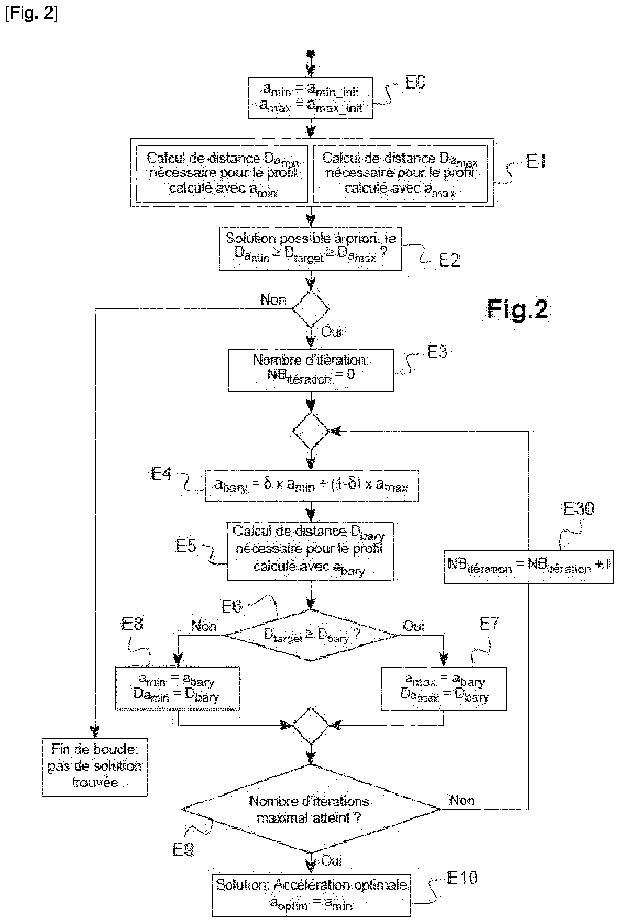

L'accélération $A_{target}$ nécessaire durant la deuxième phase Phase_2 du profil est déterminée par dichotomie selon un algorithme de dichotomie présenté à la figure 2. Cette dichotomie prend pour critère la distance nécessaire pour réaliser le profil $D_{profil}$, qui est calculée à partir des équations ci-dessus et qui doit être égale à la distance à l'événement.

Avantageusement, le profil de vitesse est donc généré à partir du jeu de paramètres fixés suivants, comportant la vitesse initiale $V_0$ du véhicule au moment du démarrage du profil de vitesse, la vitesse à atteindre $V_3$ au niveau de l'évènement, l'accélération initiale $A_{init}$ du véhicule au moment du démarrage du profil de vitesse, la valeur de jerk maximal prédéterminée et d'un paramètre non prédéterminé, en l'occurrence l'accélération cible à atteindre pendant la deuxième phase du profil $A_{target}$. Selon une particularité de l'invention, ce dernier paramètre prend une valeur optimale déterminée à l'issue d'une recherche par dichotomie, ladite valeur d'accélération optimale étant choisie dans un intervalle borné, telle que la distance nécessaire pour réaliser le profil pour le jeu de paramètres fixés et ladite valeur d'accélération optimale est égale à la distance à l'évènement $D_{event}$.

On va maintenant décrire plus en détail l'algorithme de dichotomie en référence à la figure 2. L'objectif consiste à déterminer la valeur d'accélération optimale $a_{optim}$ choisie dans un intervalle prédéterminé qui s'étend entre une valeur d'accélération minimale $a_{min}$ et une valeur d'accélération maximale $a_{max}$, telle que la distance nécessaire pour réaliser le profil soit égale à la distance à l'évènement $D_{event}$. On note que la distance nécessaire pour réaliser le profil décroît à mesure que l'accélération croît.

On fixe donc dans une première étape d'initialisation E0 ces valeurs d'accélération minimale et maximale définissant l'intervalle, soit :

$$a_{min} = a_{min\_init}$$

$$a_{max} = a_{max\_init}$$

Dans une étape E1, on calcule, à partir des équations décrites plus haut, d'une part, la distance $Da_{min}$, correspondant à la distance nécessaire pour réaliser le profil de vitesse en prenant comme valeur d'accélération nécessaire durant la deuxième phase du profil la valeur d'accélération minimale $a_{min}$ et, d'autre part, la distance $Da_{max}$, correspondant à la distance nécessaire pour réaliser le profil de vitesse en prenant comme valeur d'accélération nécessaire durant la deuxième phase du profil la valeur d'accélération maximale $a_{max}$.

On met ensuite en oeuvre une étape E2 de test, visant à vérifier si la détermination d'une valeur d'accélération optimale est possible. Autrement dit, on vérifie si la distance $D_{event}$ à laquelle se situe l'événement est comprise entre les distances nécessaires pour le profil calculées respectivement avec les valeurs d'accélération maximale et minimale $a_{max}$ et $a_{min}$, soit :

$$D_{a_{min}} \geq D_{event} \geq D_{a_{max}}$$

Si le test échoue, l'algorithme s'achève avec l'étape E20, signifiant qu'aucune valeur d'accélération ne peut être trouvée pour réaliser le profil de sorte que la distance nécessaire pour réaliser le profil soit égale à la distance à l'évènement.

Au contraire si le test s'avère positif, alors l'algorithme se poursuit avec une étape E3, dans laquelle on initialise un indice d'itération de boucle $NB_{iteration}$ à 0.

Puis, à chaque itération, dans une étape E4, on détermine tout d'abord une valeur intermédiaire $a_{bary}$ comprise dans l'intervalle borné par les valeurs prédéfinies d'accélération minimale et maximale, qui est un barycentre des deux valeurs avec $a_{min}$ et $a_{max}$ affectés des coefficients respectifs $\delta$ et $(1-\delta)$ :

$$a_{bary} = \delta \times a_{min} + (1-\delta) \times a_{max}$$

Puis, dans une étape E5, on calcule, toujours à partir des équations décrites plus haut, la distance $D_{bary}$, correspondant à la distance nécessaire pour réaliser le profil de vitesse en prenant comme valeur d'accélération nécessaire durant la deuxième phase du profil la valeur $a_{bary}$.

On compare ensuite dans une étape E6 les valeurs de distance $D_{bary}$ et $D_{event}$. Si la distance à l'évènement $D_{event}$ est supérieure ou égale à la distance nécessaire pour le profil calculé avec $a_{bary}$, alors, dans une étape E7, on fixe la valeur d'accélération maximale $a_{max}$ et la distance $Da_{max}$ nécessaire pour le profil, calculé avec $a_{max}$ de la façon suivante :

$$a_{max} = a_{bary}$$

$$Da_{max} = D_{bary}$$

Sinon, dans une étape E8, on fixe la valeur d'accélération minimale $a_{min}$ et la distance $Da_{min}$ nécessaire pour le profil, calculé avec $a_{min}$ de la façon suivante :

$$a_{min} = a_{bary}$$

$$Da_{min} = D_{bary}$$

On vérifie ensuite dans une étape E9 si le nombre maximal d'itération de la boucle est atteint. Si ce n'est pas le cas, alors l'indice d'itération de boucle $NB_{iteration}$ est incrémenté dans une étape E30, soit :

$$NB_{iteration} = NB_{iteration} + 1$$

Et on reboucle sur l'étape E4.

Si le nombre d'itérations maximal est atteint à l'étape E9, l'algorithme fournit en résultat dans une étape E10, la valeur d'accélération optimale $a_{optim}$ telle que :

$$a_{optim} = a_{min}$$

La détermination de la valeur d'accélération optimale sur l'intervalle [$a_{min\_init}$, $a_{max\_init}$] est donc un processus de recherche par dichotomie, avec à chaque itération, un calcul de la distance nécessaire pour réaliser le profil avec une valeur intermédiaire d'accélération, qui est un barycentre des deux valeurs $a_{min}$ et $a_{max}$ affectés des coefficients respectifs $\delta$ et (1-$\delta$).

Le jerk étant fixé à la valeur $J_{maxi}$, la méthode permet d'obtenir l'accélération optimale $A_{target} = a_{optim} \in$ [$a_{min\_init}$, $a_{max\_init}$] telle que :

$$D_{profil}(a_{optim}) = D_{event}$$

Autrement dit, cette valeur d'accélération optimale $a_{optim}$ est telle que la distance nécessaire pour réaliser le profil, calculé avec cette valeur déterminée par dichotomie, soit égale à la distance à l'évènement.

Cette méthode de détermination de la valeur d'accélération optimale durant la deuxième phase du profil est particulièrement avantageuse. D'une part, la charge de calcul nécessaire est prévisible. En effet, la convergence est assurée pour un nombre d'itération fixé. D'autre part, elle assure une bonne convergence. Ainsi, pour un nombre d'itération fixé N, et un coefficient $\delta$ = 0.5, la précision du résultat $a_{optim}$ est de l'ordre $\frac{a_{min} - a_{max}}{2^N}$.

Prenons un exemple concret d'application du profil de vitesse calculé selon l'invention dans le cas suivant :

$$J_{maxi} = 0.6 \; m/s^3$$

$$A_{init} = 0 \; m/s^2$$

$$V_0 = 22.2 m/s = 80 \; km/h$$

$$V_3 = 10 \; m/s = 36 \; km/h$$

$$a_{min\_init} = 0.5 \; m.s^{-2}, a_{max\_init} = 3.4 \; m.s^{-2}$$

On obtient pour $D_{event}$ = 180m :

$$a_{optim} = 2.1 \; m.s^{-2}$$

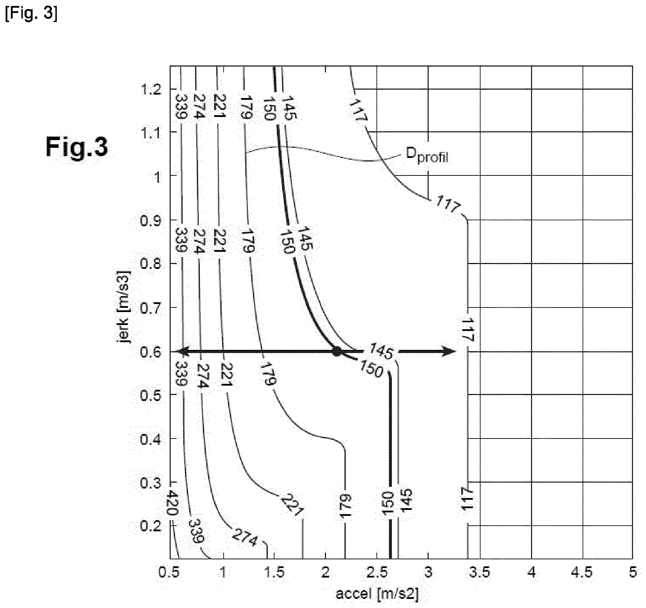

La figure 3 illustre les différentes valeurs prises par $D_{profil}$ en fonction des valeurs de jerk et d'accélération choisies pour les valeurs de $V_0$ et $V_3$ fixées. Ici, la valeur du jerk étant fixée, le balayage se fait donc en accélération suivant la flèche F.

La valeur de jerk maximale prédéterminée dans ce cas est donc obtenue par fixation à une valeur $J_{maxi}$ de 0.6 $m/s^3$, mais elle aurait aussi pu être prédéterminée différemment, en utilisant la technique de balayage. En effet, l'étape de détermination par dichotomie n'aurait alors pas utilisé un balayage en accélération selon une droite à y constant comme sur la figure 3 mais un balayage suivant un axe tel que x=y par exemple, la valeur de jerk $J_{maxi}$ aurait alors été prédéterminée en fonction de sa dépendance à l'accélération et les deux valeurs d'accélération optimale $A_{target}$ et de jerk $J_{maxi}$ auraient été obtenues lors de l'étape de dichotomie de manière telle que la distance D_profil nécessaire pour réaliser les trois phases dudit profil en appliquant ladite valeur d'accélération cible optimale déterminée et ladite valeur de jerk soit égale à ladite distance à l'évènement $D_{event}$.

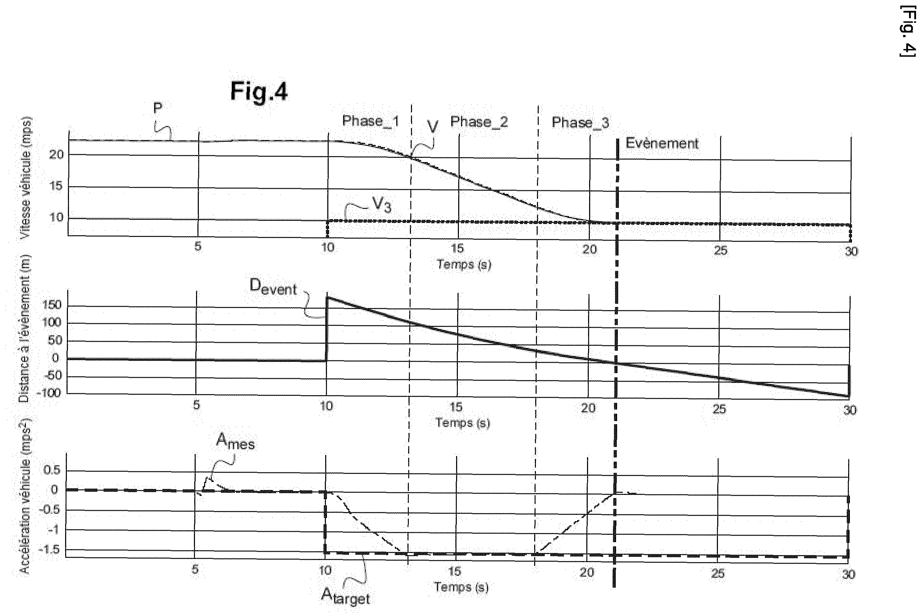

Le profil de vitesse P relatif à ces contraintes, calculé selon les principes exposés ci-dessus, est illustré sur le premier graphe de la figure 4. Sur le deuxième graphe de la figure 4, on a représenté la courbe de la distance $D_{event}$ à l'évènement en fonction du temps. On constate sur le premier graphe que la vitesse V mesurée sur le véhicule, résultant du suivi du profil par la loi de commande de contrôle longitudinal du véhicule, rejoint bien la vitesse cible requise à l'événement, soit V3, au moment où on atteint l'événement, soit au moment où $D_{event}$ = 0.

Sur le troisième graphe de la figure 4, on a représenté la courbe de l'accélération mesurée sur le véhicule $A_{mes}$ en fonction du temps. On constate que l'accélération du véhicule est limitée à 1.6 m/s², ce qui est bien inférieur à la limite définie dans les contraintes de calcul ($a_{max\_init}$ = 3.4 $m.s^{-2}$).

Il apparaît donc que le profil de vitesse calculé selon l'invention et transmis en tant que consigne au système de régulation de vitesse adaptatif du véhicule, permet au véhicule de réduire automatiquement son allure pour atteindre progressivement la vitesse cible (36km/h selon l'exemple). Ceci permet donc d'adapter la vitesse de déplacement du véhicule aux éléments contextuels détectés par les capteurs du véhicule. En particulier, il permet d'atteindre la vitesse souhaitée à la distance voulue, c'est-à-dire seulement au moment où arrivera l'évènement.

On a vu précédemment que l'implémentation du profil de vitesse ne nécessitait qu'une puissance de calcul limitée, du fait des opérations mathématiques simples requises. En outre, elle ne nécessite pas de réaliser des mesures préalables sur des trajets prédéterminés. Autrement dit, elle est généralisable pour peu qu'on reçoive un événement ({distance, vitesse}), par quelque moyen que ce soit. 1

## Revendications

1. Procédé de détermination d'un profil de vitesse à suivre d'un véhicule automobile, le procédé comprenant des étapes d'acquisition d'informations contextuelles de l'environnement routier du véhicule par un système multi-capteurs du véhicule, d'extraction de données d'évènement à partir des informations contextuelles acquises, comprenant au moins une distance à un événement ($D_{event}$) par rapport audit véhicule et une vitesse cible ($V_3$) pour ledit véhicule au niveau de cet événement, de fourniture d'une vitesse initiale ($V_0$) mesurée dudit véhicule, de détermination d'un profil de vitesse (P) à suivre en fonction du temps, entre ladite vitesse initiale mesurée et ladite vitesse cible en trois phases distinctes successives, respectivement une première phase (Phase_1) où on fixe constant le jerk à une valeur de jerk maximale prédéterminée pour atteindre une valeur d'accélération cible optimale ($A_{target}$) à la fin de la première phase, une deuxième phase (Phase_2) où on maintient constante ladite valeur d'accélération cible optimale pendant toute la durée de la deuxième phase et une troisième phase (Phase_3) où on fixe à nouveau constant le jerk pour atteindre une valeur d'accélération nulle à la fin de la troisième phase, ledit procédé étant **caractérisé en ce qu'**il comprend une étape de détermination de ladite valeur d'accélération cible optimale durant la deuxième phase ($A_{target}$) telle que la distance *($D_{profil}$)* nécessaire pour réaliser les trois phases dudit profil en appliquant ladite valeur d'accélération cible optimale déterminée soit égale à ladite distance à l'évènement ($D_{event}$).

2. Procédé selon la revendication 1, **caractérisé en ce que** la distance nécessaire pour réaliser les trois phases dudit profil est calculée à partir d'un ensemble d'équations mises en oeuvre pour le calcul du profil de vitesse, dont les étapes de calcul comprennent, pour un ensemble de paramètres fixés comportant la vitesse initiale ($V_0$) et l'accélération initiale ($A_{init}$) du véhicule au moment du démarrage du profil de vitesse, la vitesse cible ($V_3$) au niveau de l'évènement et la valeur de jerk maximale prédéterminée et pour un paramètre non fixé comportant l'accélération cible optimale à atteindre pendant la deuxième phase du profil ($A_{target}$) :

   - le calcul de la durée des phases ($T_{01}$, $T_{12}$, $T_{23}$) et des instants de début et de fin délimitant les phases,
   - le calcul des vitesses de passage ($V_1$, $V_2$) aux instants de début et de fin délimitant la deuxième phase,
   - le calcul de la vitesse en fonction du temps pour chacune des phases et
   - le calcul des distances parcourues aux instants de début et de fin délimitant les phases.

3. Procédé selon la revendication 1 ou 2, **caractérisé en ce que** la détermination de ladite valeur d'accélération cible optimale est réalisée par itération et dichotomie à partir d'un intervalle prédéterminé borné par une valeur d'accélération minimale et une valeur d'accélération maximale.

4. Procédé selon la revendication 3, **caractérisé en ce que**, à chaque itération, on calcule la distance nécessaire pour réaliser le profil avec une valeur intermédiaire d'accélération, qui est un barycentre des deux valeurs d'accélération minimale et maximale.

5. Procédé selon l'une quelconque des revendications précédentes, **caractérisé en ce que**, dans ladite troisième phase, on fixe constant le jerk à ladite valeur de jerk maximale prédéterminée de la première phase.

6. Procédé selon l'une quelconque des revendications précédentes, **caractérisé en ce que**, dans ladite troisième phase, on fixe constant le jerk à une valeur de jerk maximale prédéterminée différente de ladite valeur de jerk maximale prédéterminée de la première phase.

7. Procédé selon l'une quelconque des revendications précédentes, **caractérisé en ce que** ladite valeur de jerk maximale prédéterminée est différente selon que le profil de vitesse concerne une accélération positive ou une accélération négative du véhicule.

8. Procédé selon l'une quelconque des revendications précédentes, **caractérisé en ce qu'**il comprend une étape de transmission dudit profil de vitesse en tant que consigne à un système de régulation de vitesse adaptatif équipant le véhicule.

9. Dispositif destiné à être embarqué sur un véhicule automobile pour la mise en oeuvre du procédé selon l'une quelconque des revendications précédentes, **caractérisé en ce qu'**il comprend un système multi-capteurs apte à acquérir des informations contextuelles de l'environnement routier d'un véhicule automobile, un capteur de vitesse du véhicule, des moyens de calcul dudit profil de vitesse en fonction de données d'évènement extraites desdites informations contextuelles acquises et des moyens de commande pour appliquer ledit profil de vitesse calculé à un système de régulation de vitesse adaptatif du véhicule.

10. Véhicule automobile **caractérisé en ce qu'**il comprend un dispositif selon la revendication 9.

**Patentansprüche**

1. Verfahren zur Bestimmung eines zu folgenden Geschwindigkeitsprofils eines Kraftfahrzeugs, wobei das Verfahren Schritte des Erfassens von Kontextinformationen des Straßenumfelds des Fahrzeugs durch ein Multisensorsystem des Fahrzeugs, des Extrahierens von Ereignisdaten anhand der erfassten Kontextinformationen, die wenigstens einen Abstand zu einem Ereignis ($D_{event}$) im Verhältnis zum Fahrzeug und eine Zielgeschwindigkeit ($V_3$) für das Fahrzeug bei diesem Ereignis umfassen, des Bereitstellens einer gemessenen Anfangsgeschwindigkeit ($V_0$) des Fahrzeugs, des Bestimmens eines Geschwindigkeitsprofils (P) umfassen, dem zwischen der gemessenen Anfangsgeschwindigkeit und der Zielgeschwindigkeit in Abhängigkeit von der Zeit in drei aufeinanderfolgenden gesonderten Phasen zu folgen ist, einer ersten Phase (Phase_1), bei der der Ruck konstant auf einen vorbestimmten Maximalruckwert festgelegt wird, um am Ende der ersten Phase einen optimalen Zielbeschleunigungswert ($A_{target}$) zu erreichen, einer zweiten Phase (Phase_2), bei welcher der optimale Zielbeschleunigungswert während der gesamten Dauer der zweiten Phase konstant gehalten wird, bzw. einer dritten Phase (Phase_3), bei welcher der Ruck erneut konstant festgelegt wird, um am Ende der dritten Phase einen Beschleunigungswert von null zu erreichen, wobei das Verfahren **dadurch gekennzeichnet ist, dass** es einen Schritt des Bestimmens des optimalen Zielbeschleunigungswerts während der zweiten Phase ($A_{target}$) umfasst, so dass der notwendige Abstand ($D_{profil}$) zur Erreichung der drei Phasen des Profils unter Anwendung des bestimmten optimalen Zielbeschleunigungswerts gleich dem Abstand zum Ereignis ($D_{event}$) ist.

2. Verfahren nach Anspruch 1, **dadurch gekennzeichnet, dass** der notwendige Abstand zur Erreichung der drei Phasen des Profils anhand eines Satzes von Gleichungen berechnet wird, die zur Berechnung des Geschwindigkeitsprofils verwendet werden, deren Rechenschritte für einen Satz von festgelegten Parametern, der die Anfangsgeschwindigkeit ($V_0$) und die Anfangsbeschleunigung ($A_{init}$) des Fahrzeugs zum Zeitpunkt des Starts des Geschwindigkeitsprofils, die Zielgeschwindigkeit (V3) bei dem Ereignis und den vorbestimmten Maximalruckwert beinhaltet, und für einen nicht festgelegten Parameter, der die optimale Zielbeschleunigung beinhaltet, die während der zweiten Phase des Profils ($A_{target}$) zu erreichen ist, Folgendes umfassen:

- das Berechnen der Dauer der Phasen ($T_{01}$, $T_{12}$, $T_{23}$) und der Anfangs- und Endzeitpunkte, die die Phasen begrenzen,
- das Berechnen der Wechselgeschwindigkeiten ($V_1$, $V_2$) zum Anfangs- und zum Endzeitpunkt, die die zweite Phase begrenzen,
- das Berechnen der Geschwindigkeit in Abhängigkeit von der Zeit für jede der Phasen und
- das Berechnen der Strecken, die zu den Anfangs- und Endzeitpunkten, die die Phasen begrenzen, zurückgelegt sind.

3. Verfahren nach Anspruch 1 oder 2, **dadurch gekennzeichnet, dass** die Bestimmung des optimalen Zielbeschleunigungswerts durch Iteration und Dichotomie anhand eines vorbestimmten Intervalls durchgeführt wird, das von einem minimalen Beschleunigungswert und einem maximalen Beschleunigungswert begrenzt ist.

4. Verfahren nach Anspruch 3, **dadurch gekennzeichnet, dass** bei jeder Iteration der notwendige Abstand zur Erreichung des Profils mit einem Zwischenbeschleunigungswert berechnet wird, der ein Baryzentrum der zwei Beschleunigungswerte, des minimalen und maximalen, ist.

5. Verfahren nach einem der vorhergehenden Ansprüche, **dadurch gekennzeichnet, dass** in der dritten Phase der Ruck konstant auf den vorbestimmten Maximalruckwert der ersten Phase festgelegt wird.

6. Verfahren nach einem der vorhergehenden Ansprüche, **dadurch gekennzeichnet, dass** in der dritten Phase der Ruck konstant auf einen vorbestimmten Maximalruckwert festgelegt wird, der sich vom vorbestimmten Maximalruckwert der ersten Phase unterscheidet.

7. Verfahren nach einem der vorhergehenden Ansprüche, **dadurch gekennzeichnet, dass** der vorbestimmte Maximalruckwert je nach dem, ob das Geschwindigkeitsprofil eine positive Beschleunigung oder eine negative Beschleunigung des Fahrzeugs betrifft, unterschiedlich ist.

8. Verfahren nach einem der vorhergehenden Ansprüche, **dadurch gekennzeichnet, dass** es einen Schritt des Übertragens des Geschwindigkeitsprofils als Sollwert an ein adaptives Geschwindigkeitsregelsystem umfasst, mit dem das Fahrzeug ausgestattet ist.

9. Vorrichtung zum Einbau in einem Kraftfahrzeug für die Durchführung des Verfahrens nach einem der vorhergehenden Ansprüche, **dadurch gekennzeichnet, dass** sie ein Multisensorsystem, das geeignet ist, Kontextinformationen des Straßenumfelds eines Kraftfahrzeugs zu erfassen, einen Geschwindigkeitssensor des Fahrzeugs, Mittel zur Berechnung des Geschwindigkeitsprofils in Abhängigkeit von Ereignisdaten, die aus den erfassten Kontextinformationen extrahiert werden, und Steuermittel zur Anwendung des berechneten Geschwindigkeitsprofils auf ein adaptives Geschwindigkeitsregelsystem des Fahrzeugs umfasst.

10. Kraftfahrzeug, **dadurch gekennzeichnet, dass** es eine Vorrichtung nach Anspruch 9 umfasst.

**Claims**

1. Method for determining a speed profile to be followed by a motor vehicle, the method comprising steps of acquiring contextual information on the road environment of the vehicle via a multi-sensor system of the vehicle, of extracting event data from the acquired contextual information, comprising at least one distance from an event ($D_{event}$) in relation to said vehicle and a target speed ($V_3$) for said vehicle at this event, of providing a measured initial speed ($V_0$) of said vehicle, of determining a speed profile (P) to be followed as a function of time, between said measured initial speed and said target speed in three successive distinct phases, respectively a first phase (Phase_1) in which the jerk is set constant at a predetermined maximum jerk value in order to reach an optimal target acceleration value ($A_{target}$) at the end of the first phase, a second phase (Phase_2) in which said optimal target acceleration value is kept constant throughout the duration of the second phase and a third phase (Phase_3) in which the jerk is again set constant in order to reach a zero acceleration value at the end of the third phase, said method being **characterized in that** it comprises a step of determining said optimal target acceleration value ($A_{target}$) during the second phase such that the distance (**$D_{profil}$**) required to carry out the three phases of said profile by applying said determined optimal target acceleration value is equal to said distance from the event ($D_{event}$).

2. Method according to Claim 1, **characterized in that** the distance required to carry out the three phases of said profile is calculated from a set of equations implemented for the calculation of the speed profile, the calculation steps of which comprise, for a set of fixed parameters comprising the initial speed ($V_0$) and the initial acceleration (**$A_{init}$**) of the vehicle when starting the speed profile, the target speed ($V_3$) at the event and the predetermined maximum jerk value, and for an unfixed parameter comprising the optimal target acceleration to be reached in the second phase of the profile (**$A_{target}$**):

- the calculation of the duration of the phases (**$T_{01}, T_{12}, T_{23}$**) and start and end times delimiting the phases,
- the calculation of the passage speeds ($V_1$, $V_2$) at the start and end times delimiting the second phase,
- the calculation of the speed as a function of time for each of the phases, and
- the calculation of the distances travelled at the start and end times delimiting the phases.

3. Method according to Claim 1 or 2, **characterized in that** the determination of said optimal target acceleration value is carried out through iteration and bisection from a predetermined range bounded by a minimum acceleration value and a maximum acceleration value.

4. Method according to Claim 3, **characterized in that**, at each iteration, the distance required to produce the profile is calculated with an intermediate acceleration value, which is a barycenter of the two, minimum and maximum, acceleration values.

5. Method according to any one of the preceding claims, **characterized in that**, in said third phase, the jerk is set constant at said predetermined maximum jerk value of the first phase.

6. Method according to any one of the preceding claims, **characterized in that**, in said third phase, the jerk is set constant at a predetermined maximum jerk value different from said predetermined maximum jerk value of the first phase.

7. Method according to any one of the preceding claims, **characterized in that** said predetermined maximum jerk value is different depending on whether the speed profile relates to a positive acceleration or to a negative acceleration of the vehicle.

8. Method according to any one of the preceding claims, **characterized in that** it comprises a step of transmitting said speed profile as an instruction to an adaptive speed control system fitted to the vehicle.

9. Device intended to be installed on board a motor vehicle for the implementation of the method according to any one of the preceding claims, **characterized in that** it comprises a multi-sensor system able to acquire contextual information on the road environment of a motor vehicle, a vehicle speed sensor, means for calculating said speed profile as a function of event data extracted from said acquired contextual information and control means for applying said calculated speed profile to a vehicle adaptive speed control system.

10. Motor vehicle, **characterized in that** it comprises a device according to Claim 9.

[Fig. 1]

Fig.1

[Fig. 2]

Fig.2

[Fig. 3]

Fig.3

[Fig. 4]

Fig.4

**RÉFÉRENCES CITÉES DANS LA DESCRIPTION**

**Documents brevets cités dans la description**

- US 2012277965 A1
- US 2019106108 A